# EUROPEAN PATENT APPLICATION

(11) **EP 1 936 069 A2**
(43) Date of publication of application: **25.06.2008**
(21) Application number: 07290780.1
(22) Date of filing: 22.06.2007
(51) Int. Cl.: E04F 15/02, B32B 21/08, E04F 15/20

(54) **Laminate floorboard**

(30) Priority: 11.12.2006 CN 200620036595 U
(71) Applicant: Plantation Timber Products Leshan Flooring Co., Ltd., 31 Wujiang Road Shanghai (CN)
(72) Inventor: Yiming, Ma, Leshan City, Sichuan, Province (CN); Zhongqing, Xia, Leshan City, Sichuan, Province (CN); Hua, Yang, Leshan City, Sichuan, Province (CN); Heng, Zhang, Leshan City, Sichuan, Province (CN)
(74) Representative: Bloch, Gérard

(57) **Abstract**

The flooring comprises the base material layer (2), a balance layer (3) and a decoring layer (1) that is coated with alumina-contained melamine formaldehyde resin. The furniture finish laminate flooring has not only the same advantages of not-apt-to-deform and high abrasive resistance as the traditional consolidated compound flooring, but also has the high brightness and definition like the surfaces of high grade furniture. The flooring has a reasonable design, simple structure, is easy to produce. It saves raw materials and reduces the production cost.

## Description

### Technical field

The present application relates to flooring which is used in the field of building materials and architectural decoration technology. More precisely, it relates to furniture finish laminate flooring which can be especially adapted to apartments and residential houses.

### Background of the invention

With the rapid development of national economy in China, the progress of urbanization has been speeded up vigorously. The constant improvement of living standards of the Chinese people has enabled them to expect that their living and working conditions will be further improved. Therefore, special attention has been paid to the decoration and interior designing of residential houses. As it is well known, the solid wood flooring has many advantages, such as nice-looking, luxurious, genuine in timber grain and comfortable in dwelling, and so it was deeply favored at the very start when it appeared on the market. But, it has to be noted that the solid wood flooring is apt to be deformed and poor in abrasion resistance. Subsequently, another new type of flooring turned up, i.e. consolidated compound flooring covering. The so called consolidated compound flooring is a kind of flooring, wherein the surfaces of the artificial board base materials including particle boards, Middle Density Fiber (MDF) boards or High Density Fiber (HDF) boards, are covered with a layer or multi layers of special purpose papers dipping into thermosetting amino resin, with a balance layer added to the back side of such base materials and a wear or abrasion resistant layer to the front side, followed by thermal compression. In comparison to the solid wood flooring, the said consolidated compound flooring features high abrasion resistance, being not apt to deform, thereby it was deeply favored when it came onto the market. The traditional consolidated compound flooring is of composite structure consisting of the abrasion resistant paper layer, decorating layer, base material layer and balance layer. However, as the traditional consolidated compound flooring has, on its surface, a layer of abrasion resistant paper that covers decorating layer, the designs and patterns of the decorating layer become visually vague or dim, with poor definition, resulting in failure to meet the demands of higher level of customers.

### SUMMARY OF THE INVENTION

The object of the present application is to provide a furniture finish laminate flooring featuring novel design and simple structure on the basis of the prior art. Like the consolidated compound flooring, the composite flooring of the present application is not apt to deform, with the advantage of high abrasive resistance, and additionally, it possesses features of the same high brightness and definition as surface of high-grade furniture.

The invention of the present application is carried out through the following technical approach.

The back side of the base material is laminated with at least one balance layer, and the flooring is characterized by the fact that the front side of base material layer is laminated with a decorating layer that is coated with alumina-contained melamine formaldehyde resin.

Structurally, the top of the base material is of a mono-layer structure, as the decorating layer, that is coated with alumina-contained melamine formaldehyde resin, instead of the existing double-layer structure comprising abrasion resistance paper layer and decoration layer as used in the traditional consolidated compound flooring, thus the furniture finish laminate flooring of the present application is of three-layer composite structure. The present invention also relates to a furniture laminate flooring, comprising a base material layer, the back of which is laminated with at least one balance layer, characterized in that the front side of base material layer is laminated with a decorating layer being cemented to the base material by a permeating wear resistant material. Subsequently, the furniture finish laminate flooring has better abrasion resistance in operating performance, and the abrasion resistance data has met the requirements of China National Standard GB/T 18102. Concurrently it has the characteristics of high definition like the surfaces of high grade furniture. As the furniture finish laminate flooring of the present application has only three layers, it has the more remarkable advantages such as simplified production processes, saving of raw materials and reduction of production cost as compared with the traditional consolidated compound flooring. Furthermore, a silencing mat can also be attached to the undersurface of balance layer to improve sound insulation effects markedly and further raise the quality grades of products.

### DETAILED DESCRIPTION OF THE DRAWINGS

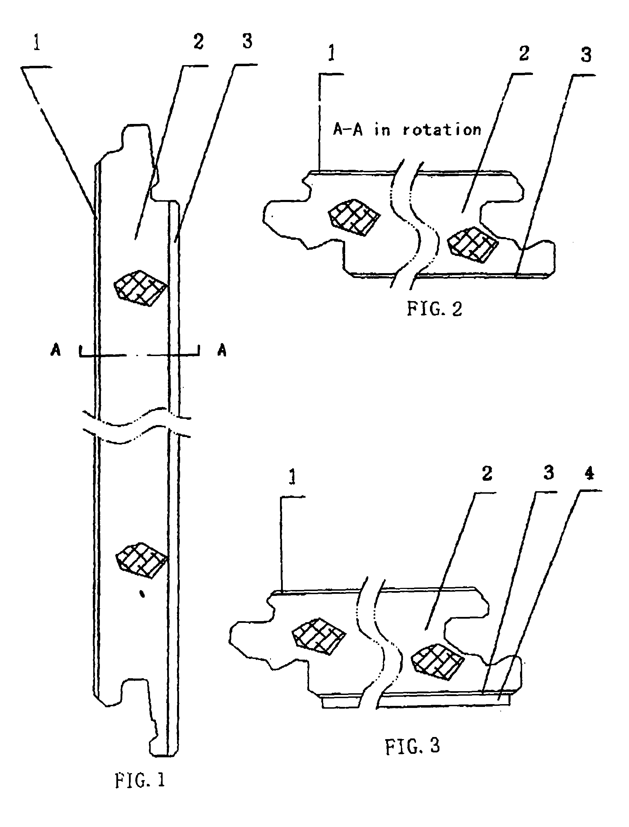

FIG. 1 is a schematic cross-sectional view of the flooring of the present utility model;
FIG. 2 is a schematic cross-sectional view taken a long line A-A view of figure 1 and
FIG. 3 is a schematic cross-sectional view similar to figure 2, with additional silencing mat layer.

### DESCRIPTION OF THE PREFERRED EMBODIMENTS

The furniture finish laminate flooring of the present invention is achieved in the following way. MDF board is used as the base material 2, the backside of which is covered with at least one balance layer 3 and the front side of which is covered with a decorating layer 1 that is coated with alumina-contained melamine formaldehyde resin. Additionally, a sound insulation mat 4 can be attached to the undersurface of the balance layer 3 so that a good sound proof furniture finish laminate flooring is formed for house installation.

HDF board can also be used as the base material 2, the back side of which is covered with a balance layer 3 and the front side of which is covered with a decorating layer 1 that is coated with alumina-contained melamine formaldehyde resin. Additionally, a sound insulation mat 4 can be attached to the undersurface of the balance layer 3 so that a good sound proof furniture finish laminate flooring is formed for house installation.

Instead of MDF or HDF board as base material, could also be used for instance a particle board, a multi layer (as least two layers) of plywood, a board of solid wood, a board of bamboo wood.

There could be, on the back side of the base material, several balance layers.

Between the decorating layer 1 and the base material layer 2, the flooring may include a connection layer.

The decorating layer 1 covering the front side of the base material 2 may be coated by a layer of wear resistant material other than alumina-contained melamine formaldehyde resin. The layer 1 could also be cemented to the base material 2 by a permeating wear resistant material. The decorating layer may be, for instance, a decorating paper or decorating cloth.

## Claims

1. A furniture finish laminate flooring comprising a base material layer (2), the back of which is laminated with at least one balance layer (3), **characterized in that** the front side of base material layer (2) is laminated with a decorating layer (1) being coated with a wear resistant material.

2. A furniture laminate flooring comprising a base material layer (2), the back of which is laminated with at least one balance layer (3), **characterized in that** the front side of base materiel layer (2) is laminated with a decorating layer (1) being cemented to the base materiel (2) by a permeating wear resistant material.

3. The furniture finish laminate flooring as claimed in claim 1 or 2, wherein the undersurface of said balance layer (3) is further laminated with a silencing mat (4).

4. A furniture laminate flooring as claimed in one of claims 1 to 3, wherein the back of the base material layer (2) is laminated with several balance layers.

5. A furniture laminate flooring as claimed in one of claims 1 to 4, wherein a connection layer is provided between the decorative layer (1) and the base material layer (2).

6. A furniture laminate flooring as claimed in one of claims 1 to 5, wherein the decorating layer (1) is a decorating paper.

7. A furniture laminate flooring as claimed in one of claims 1 to 5, wherein the decorating layer (1) is a decorating cloth.

8. A furniture laminate flooring as claimed in claim 1, wherein the wear resistant material is alumina-contained melamine formaldehyde resin.
